# EUROPEAN PATENT APPLICATION

(11) **EP 0 703 380 A1**
(43) Date of publication of application: **27.03.1996**
(21) Application number: 94830450.6
(22) Date of filing: 22.09.1994
(51) Int. Cl.: F16D 65/56

(54) **Anti-rotation device for pistons of a disc brake assembly**

(71) Applicant: ROCKWELL INTERNATIONAL CORPORATION, Pittsburg, Pennsylvania 15222-3123 (US)
(72) Inventor: Forni, Roberto, I-28062 Cameri, Novara (IT); Harrup, Clive, Bromham, Bedfordshire MK43 8JA (GB)
(74) Representative: Leiser, Gottfried, Dipl.-Ing.

(57) **Abstract**

A caliper assembly for a disc brake having opposed friction pads (28) at least one of which may be axially displaced into engagement with a rotor (30) rotatably maintained about an axis and drivingly associated with a vehicle wheel. The caliper assembly includes an eccentric (15) which is bearingly carried in the caliper housing and rotatably engaged to a reciprocating element (20) to convert rotation of the eccentric (15) into a reciprocating motion. The eccentric is rotated by a pivoted lever (16) deriving motive force from an actuation means such as an air actuated cylinder. The reciprocating element (20) defines a first face and has first and second annularly displaced axially extending bores. Adjustable length sleeve assemblies (22,52) are located in the first and second bores with portions extending axially therefrom and connected to a load plate (24). The load plate defines an annularly extending axially displaced second face which may be axially positioned relative to the first face of the load plate by adjustment of the length of the sleeve assemblies. The sleeve assemblies (22,52) each feature a first cylindrical member having a first end defining a head and a second end having threads defined on the external surface thereof. The head of the first end features a curved recess which registers with and engages cooperating curves defined on projections extending from the load plate. An annular cip is coaxially disposed about the head of the first end and includes inwardly directed projections which engage recesses formed in the head as well as in the projections extending from the load plate to provide an anti-rotation effect. A second cylindrical member having an opening defining a bore has threads defined on the internal surface thereof which cooperate with respective threads defined on the external surface of the first cylindrical member. The second cylindrical member includes a first end portion having an external surface which is rotatably received within one of the bores of the reciprocating element and a second opposing end defining a radially extending head located thereon defining a limit of axial displacement toward the first face of the load plate. The second cylindrical member is drivingly associated with an adjusting gear that may be used to define a coordinated relative rotary position between the first and second cylindrical members. Controlling the respective relative rotary position of the first and second cylinders is the technique by which the axially extending dimension of the adjustable length sleeve assemblies (22,52) of the present invention is accomplished. The relative rotational position of the adjusting sleeve components establishes the dimensional relationship between the first face of the reciprocating element and the second face of the load plate thereby accomplishing definition of the working clearance between the friction pad (28) and rotor (30).

## Description

### BACKGROUND OF THE INVENTION

### FIELD OF THE INVENTION

This invention relates to disc brake mechanisms and more specifically to mechanisms which provide for adjustment thereof to compensate for wear of the friction materials utilized therein.

### DESCRIPTION OF THE RELATED ART

Adjustment mechanisms for disc brake systems have been used previously. An example of such a mechanism is described in German patent application DE 41 31 630 A1 and DE 41 31 631 A1. The mechanism includes a disc brake caliper housing which defines a cavity containing a force application system which converts rotary motion into reciprocating motion by means of an eccentric causing reciprocation of a force application member. The system described therein teaches a pair of adjustable length pistons threadably engaging annularly displaced threaded bores of the force application member. The axially extending dimension between the force application member and the backing plate of the friction pad may be adjusted to compensate for wear in the friction pad by rotation of the threaded pistons. The pistons are rotated by engagement with a splined shaft which extends into a cooperating spline defined in a bore thereof. The adjustment mechanism which provides rotation of the splined shaft is carried on the caliper housing, necessitating a floating and telescoping relation between the spline defined in the internal bore of the pistons and the splined shaft. Such a splined connection presents a design and manufacturing complexity which adds cost to the final product. There is a need for an adjustment mechanism which eliminates the necessity for a splined connection.

### SUMMARY OF THE PRESENT INVENTION

The present invention includes a caliper assembly for a disc brake having opposed friction pads at least one of which may be axially displaced into engagement with a rotor rotatably maintained about an axis and drivingly associated with a vehicle wheel. The caliper assembly includes an eccentric which is bearingly carried in the caliper housing and rotatably engaged to a reciprocating element to convert rotation of the eccentric into a reciprocating motion. The eccentric is rotated by a pivoted lever deriving motive force from an actuation means such as an air actuated cylinder. The reciprocating element defines a first face and has first and second annularly displaced axially extending bores. Adjustable length sleeve assemblies are located in the first and second bores with portions extending axially therefrom and connected to a load plate. The load plate defines an annularly extending axially displaced second face which may be axially positioned relative to the first face of the load plate by adjustment of the length of the sleeve assemblies. The sleeve assemblies each feature a first cylindrical member having a first end defining a head and a second end having threads defined on the external surface thereof. The head of the first end features a curved recess which registers with and engages cooperating curves defined on projections extending from the load plate. An annular clip is coaxially disposed about the head of the first end and includes inwardly directed projections which engage recesses formed in the head as well as in the projections extending from the load plate to provide an anti-rotation effect. A second cylindrical member having an opening defining a bore has threads defined on the internal surface thereof which cooperate with respective threads defined on the external surface of the first cylindrical member. The second cylindrical member includes a first end portion having an external surface which is rotatably received within one of the bores of the reciprocating element and a second opposing end defining a radially extending head located thereon defining a limit of axial displacement toward the first face of the load plate. The second cylindrical member is drivingly associated with an adjusting gear that may be used to define a coordinated relative rotary position between the first and second cylindrical members. Controlling the respective relative rotary position of the first and second cylinders is the technique by which the axially extending dimension of the adjustable length sleeve assemblies of the present invention is accomplished. The relative rotational position of the adjusting sleeve components establishes the dimensional relationship between the first face of the reciprocating element and the second face of the load plate thereby accomplishing definition of the working clearance between the friction pad and rotor.

These and other aspects of the present invention will become more readily apparent by reference to the following detailed description of the embodiments as shown in the drawings.

### BRIEF DESCRIPTION OF THE DRAWINGS

Figure 1 is an exploded view of the components of the present invention;
Figure 2 is a side view of the eccentric assembly of the present invention;
Figure 3 is a plan view of the eccentric assembly of the present invention;
Figure 4 is a plan view of a cross section of the present invention;
Figure 5 is a perspective view of the load plate and piston interface;
Figure 6 is a fragmented view of the piston incorporated in the present invention;
Figure 7 is a perspective view of the clip used to secure the load plate to the piston;
Figure 8 is a plan view of the rigid lever of the present invention;
Figure 9 is a cross sectional view of the adjuster mechanism of the present invention;
Figure 10 is an exploded view of the adjuster mechanism of the present invention; and
Figures 11, 12 and 13 are sequential views of the interaction of the rigid level, the resilient lever and the reaction lever of the present invention in various stages of operation.

### DETAILED DESCRIPTION OF THE PREFERRED EMBODIMENT

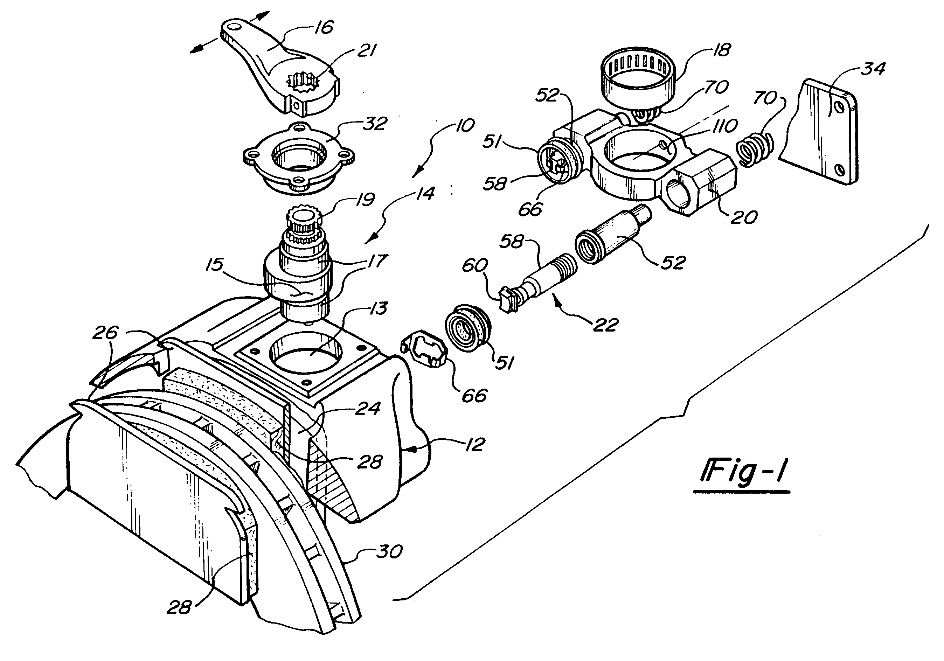

The preferred embodiment of the present invention as shown in Figure 1 includes a brake assembly 10 comprising caliper housing 12 defining a cavity 13. Eccentric assembly 14 includes eccentric 15 which is supported for rotation by sliding bearing journals 17,17. Eccentric assembly 14 further includes male spline 19 cooperating with female spline 21 formed on actuating lever 16. Motive force for actuation of the present invention is provided by a reciprocating actuator (not shown) applying a pivoting force to lever 16. Eccentric bearing retainer 32 defines and maintains the axis of rotation of eccentric assembly 14 within caliper housing 12. Eccentric bearing 18 is located within bore 110 formed in reciprocating element 20 to facilitate a low friction conversion of rotary motion of eccentric assembly 14 to reciprocating motion of reciprocating element 20. A pair of annularly displaced adjusting sleeve assemblies 22,22 are maintained within bores 38,38 defined in reciprocating element 20. Adjusting sleeve assemblies 22,22 are secured by clips 66,66 to load plate 24 which transmits force through backing plate 26 into friction material 28 upon application of force by reciprocating element 20. In such a manner, friction material 28 is displaced into engagement with rotor 30 to retard rotation of same. Cover plate 34 and reciprocating seals 51,51 define a closed structure sealing cavity 13 of caliper housing 12.

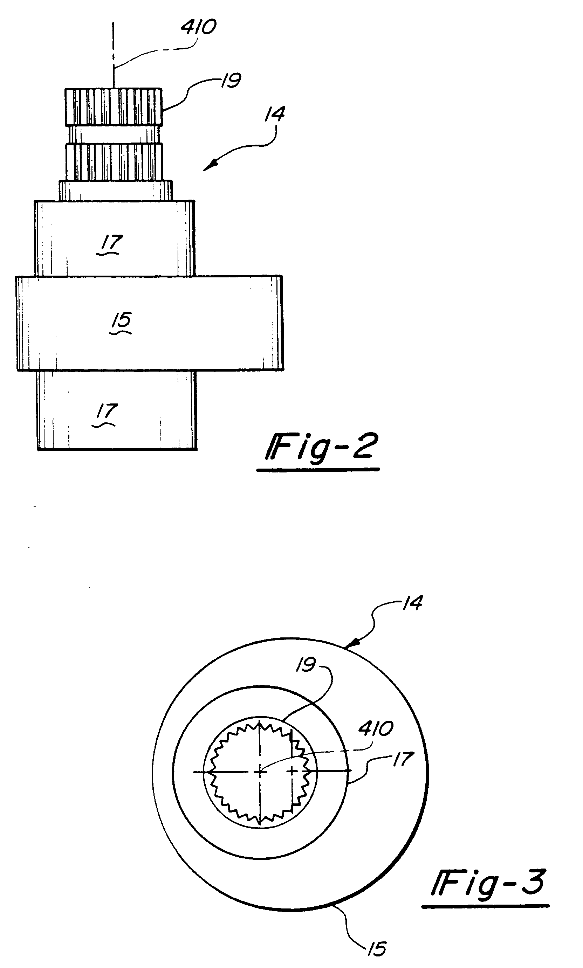

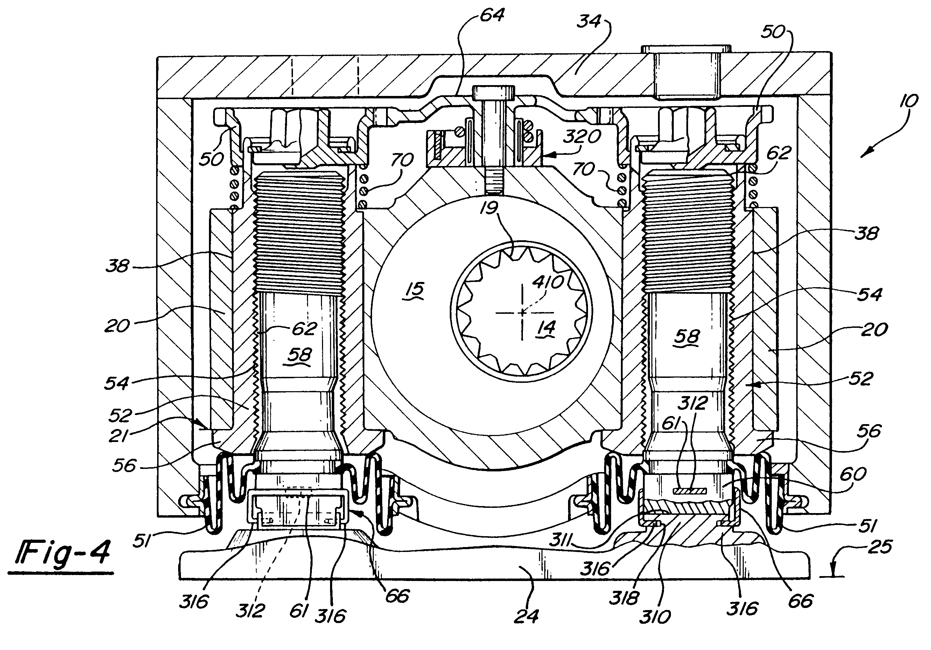

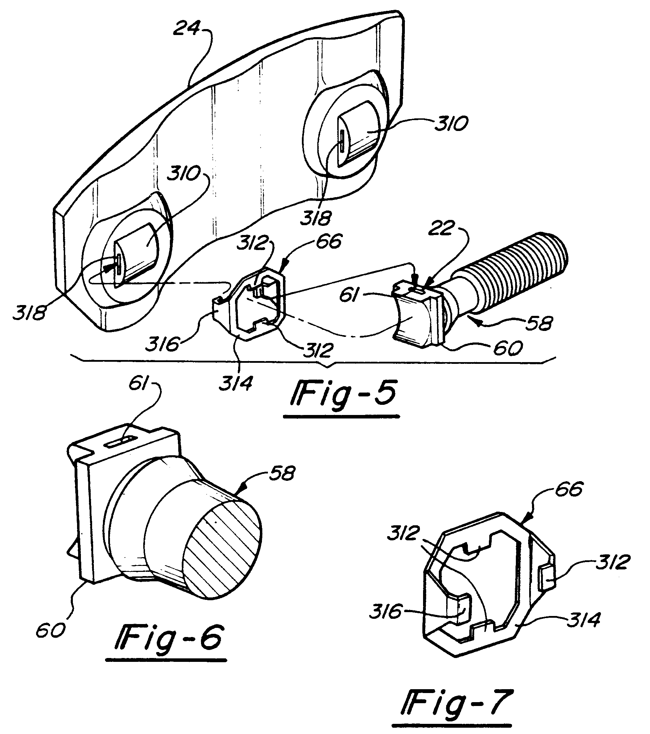

Figure 2 is a side view of eccentric assembly 14, whereas Figure 3 is a plan view thereof, demonstrating eccentric 15 with respect to axis 410 of eccentric assembly 14. Figure 4 is a plan view/cross-sectional view of reciprocating element 20 and adjustable sleeve assemblies 22,22. Reciprocating element 20 defines a reference face 21 from which the position of face 25 of load plate 24 is selectably adjusted. Such an adjustment is accomplished by controlling the dimension therebetween as a result of relative rotation of sleeve 52 with respect to piston 58. Sleeve 52 is maintained in low friction rotatable relation in bore 38 of reciprocating element 20. Annular head 56 is maintained in contact with face 21 by urging of spring 70. Gear 50 is drivingly connected to sleeve 52 by means of a press fit. Adjusting gear 64 is engageable with gear 50 to define a synchronized relative rotational position between piston 58 and sleeve 52 of each sleeve assembly 22,22. Piston 58 includes piston head 60 which may be secured to load plate 24 by clip 66. Load plate 24 includes annularly displaced semicylindrical projections 310,310each defining a simple curved surface which cooperates with respective curved surfaces 311,311 defined on piston head 60 to establish a line-point of contact therebetween to transmit force to friction pad 28. (See Figure 5). Recess 61 as shown in Figures 5 and 6 are formed on opposite sides of piston head 60 and receive inwardly directed tabs 312,312 of clip 66, as shown in Figure 7. Annular portion 314 of clip 66 surrounds piston head 60 and semicylindrical projections 310 and further includes axially displaced inwardly directed tabs 316 which engage recesses 318, 318. Recesses 61 and 318 feature a dimensionally greater depth than required by the length tabs 312 and 316 thereby permitting a degree of horizontal and vertical movement. All other dimensional relations between recesses 61 and 318 and tabs 312 and 316 conform closely to provide an anti-rotation effect. Clip 66,66 thereby establishes an anti-rotational effect while permitting a range of relative displacement which additionally provides a self aligning relation of piston 58 to load plate 24.

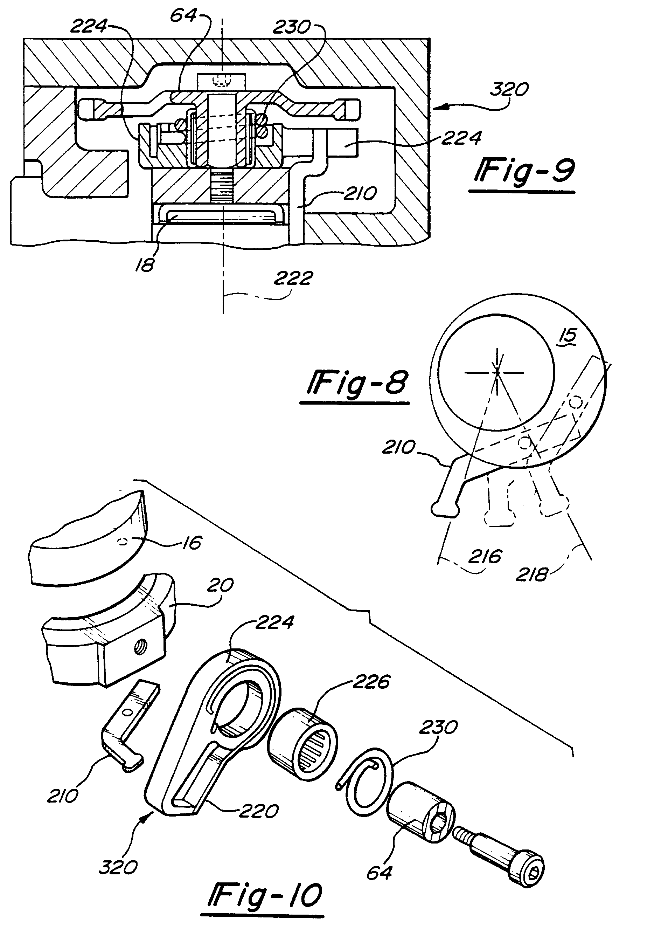

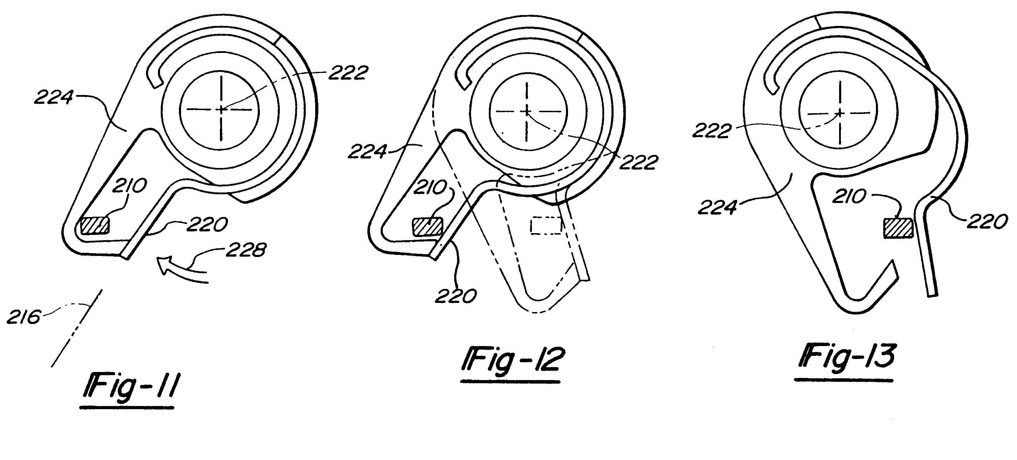

The relative rotary position of female thread 54 and male thread 62 define the relative axial length of sleeve assemblies 22,22 and resultantly the dimension between face 21 and face 25. Adjusting gear 64 may be selectively rotated by an adjustment mechanism 320 which derives motive force by harnessing angular displacements of lever 16 which exceed that which is necessary to displace friction pad 28 through a clearance dimension into engagement with rotor 30. A rigid lever 210 is secured to eccentric 15 as shown in Figure 8. Actuation of eccentric 16 produces a corresponding displacement of rigid lever 210 through a range of angular displacement beginning at locus 216 and ending at locus 218. The outermost radial portion of rigid lever 210 engages resilient lever 220 which is rotatably disposed about axis 222 of adjusting gear 64. Resilient lever 220 is drivingly engaged with reaction member 224 which is also drivingly engaged to one-way clutch 226 via torque limiting device 230. The desired rotary position of adjusting gear 64 is accomplished by the interaction of rigid lever 210 and resilient lever 220. Resilient lever 220 is preloaded in direction 228 against reaction member 224. The preload is a result of deformation of resilient member 220 against reaction member 224. The preload magnitude is preferably equal to the force necessary to generate the torque required to drive the adjustment system while in free running mode. Such resistance of the adjustment system is a result of gear and thread engagements, bearing losses, etc. Rigid lever 210 as shown in Figures 11-13 is angularly displaced from locus 216 through a first angle before engaging resilient lever 220 as shown in Figure 12. Upon the engagement of rigid lever 210 and resilient lever 220, reaction member 224 will be driven a corresponding angular displacement. When the angular displacement of reaction member 224 corresponds to the displaced position at which no clearance exists between friction pad 28 and rotor 30, continued displacement of rigid lever 210 as a result of system deflection will overcome the preload of resilient member 220 deforming same as shown in Figure 13.

In the preferred embodiment, one-way clutch 226 is a zero backlash free clutch enabling rotation in one direction with no torque/rotation transmitted in the opposite direction and the torque limiting device 230 is a coil spring wound about an external radial surface of one-way clutch 226. A first end of the wire used to construct the coil spring is driven by engagement with reaction member 224. A second end of the wire used to construct the coil spring is terminated as a coil loop ending on the external surface of one-way clutch 226. The coil is wound to an internal diameter slightly smaller than the external diameter of one-way clutch 226 thereby establishing a positive transmission of torque therethrough. The coil is wound and installed such that transmission of torque therethrough to accomplish adjustment tightens the coil around the external surface of one-way clutch 226. Upon release of brake force, eccentric 16 will return to an unactuated position consequently returning rigid lever 210 to beginning locus 216. Rigid lever 210 drives reaction member 224 to the unactuated position. When friction pad 28 is sufficiently worn to require replacement, adjustment gear 64 must be de-adjusted or reversed to permit removal. Such may be accomplished by securing an appropriately sized wrench to adjusting gear 64 or either gear 50,50 and rotating the adjustment gear in the de-adjust direction. The de-adjust function is accomplished when torque has been applied which exceeds the torque threshold of torque limiting device 230 causing the coil to slip on the external surface of one-way clutch 226. In this operation, no damaging torques are imposed upon adjustment mechanism 320.

One skilled in the art will readily recognize that certain specific details shown in the foregoing specification and drawings are exemplary in nature and subject to modification without departing from the teachings of the disclosure. Various modifications of the invention discussed in the foregoing description will become apparent to those skilled in the art. All such variations that basically rely on the teachings through which the invention has advanced the art are properly considered within the spirit and scope of the invention.

## Claims

1. In a caliper assembly for a disc brake including opposed friction pads at least one of which may be axially displaced into engagement with a rotor rotatably maintained about an axis and drivingly associated with a vehicle wheel, said caliper assembly including a reciprocating element defining an axially disposed first face and further having first and second annularly displaced axially extending bores, said caliper assembly including sleeve assemblies disposed in said first and second bores with portions extending therefrom and engaging a structural member; said structural member defining an annularly extending axially disposed second face which may be axially displaced from said first face by adjustment of the axially extending dimension of said sleeve assemblies, said sleeve assemblies each including a first axially extending cylindrical member having a first end engageable with said structural member and a second end having threads defined on an external surface thereof; said sleeve assemblies each including a second axially extending cylindrical member having an opening defining a bore having threads defined on the surface thereof for cooperating with said threads defined on the external surface of said first cylindrical member; said second cylindrical member including a first end having an external surface rotatably engageable with one of said first and second bores and a second end defining a radially extending portion disposed thereon defining a limit of axial displacement in a direction toward said first face; said sleeve assemblies further including means to control a relative rotary position between said first and second cylindrical members by relative rotation of said second member with respect to said first cylindrical member; the invention further comprising:
each of said first axially extending cylindrical members having a first end defined by an inwardly extending semicylindrical surface to form a concave recess;
said structural member including first and second annularly displaced outwardly extending semicylindrical surfaces which form convex projections; and
wherein said convex projections cooperate with said concave recesses to transmit force therethrough upon engagement therebetween.

2. The invention of Claim 1 wherein said first and second annularly displaced outwardly extending semicylindrical surfaces define simple curves which extend along parallel to one another.

3. The invention of Claim 1 wherein said first axially extending members of each of said sleeve assemblies are affixed to said structural member.

4. The invention of Claim 1 wherein said first axially extending members are maintained nonrotative by affixing means securing each of said first axially extending members of each of said sleeve assemblies to said structural member.

5. The invention of Claim 1 wherein each of said first axially extending members include first and second recesses defined on opposite sides of an axially extending axis thereof; and,
each of said annularly displaced outwardly extending semicylindrical surfaces of said structural member include third and fourth recesses defined on opposite sides of said axially extending axis;
and further including a connecting member including an annular portion disposed in coaxial relation with respect to each of said first axially extending members and said annularly displaced outwardly extending semicylindrical surfaces which further include inwardly directed first, second, third and fourth tab members disposed for respective engagement with said first, second, third and fourth recesses.

6. The invention of Claim 1 wherein said first and second tab members are disposed on said annular portion of said connecting member along an axis which is oriented orthogonal to an axis extending through said third and fourth tab members.

7. The invention of Claim 1 wherein said third and fourth tab members are disposed on an annular portion of said connecting member in a plane which is displaced axially from a plane defined through said first and second tab members.

8. The invention of Claim 1 wherein each of said tabs are characterized by a first width and a first length dimension and each of said recesses are characterized by a second width and a second length dimension and respectively engaged tabs and recesses are defined by a cooperating dimensional relationships in which said first and second widths are substantially equal and said first length is less than said second length.

9. In a caliper assembly for a disc brake including opposed friction pads at least one of which may be axially displaced into engagement with a rotor rotatably maintained about an axis and drivingly associated with a vehicle wheel, said caliper assembly including a reciprocating element defining an axially disposed first face and further having first and second annularly displaced axially extending bores, said caliper assembly including sleeve assemblies disposed in said first and second bores with portions extending therefrom and engaging a structural member; said structural member defining an annularly extending axially disposed second face which may be axially displaced from said first face by adjustment of the axially extending dimension of said sleeve assemblies, said sleeve assemblies each including a first axially extending cylindrical member having a first end engageable with said structural member and a second end having threads defined on an external surface thereof; said sleeve assemblies each including a second axially extending cylindrical member having an opening defining a bore having threads defined on the surface thereof for cooperating with said threads defined on the external surface of said first cylindrical member; said second cylindrical member including a first end having an external surface rotatably engageable with one of said first and second bores and a second end defining a radially extending portion disposed thereon defining a limit of axial displacement in a direction toward said first face; said sleeve assemblies further including means to control a relative rotary position between said first and second cylindrical members by relative rotation of said second member with respect to said first cylindrical member; the invention comprising a connecting member defining a positional relation between said first axially extending cylindrical member and said structural member which prevents rotation of said cylindrical member.

10. The invention of Claim 9 wherein said member includes an annular portion featuring a first pair of oppositely disposed inwardly directed projections disposed for engaging portions of said first axially extending cylindrical member and a second pair of oppositely disposed inwardly directed projections disposed for engaging portions of said structural member.

11. The invention of Claim 10 wherein said oppositely disposed inwardly directed projections for engaging portions of said cylindrical member are disposed along an axis oriented orthogonal to an axis extending through said oppositely disposed inwardly directed projections for engaging portions of said structural member.

12. The invention of Claim 10 wherein said first pair of projections is disposed in a plane which is axially displaced from a plane extending through said second pair of projections.

13. The invention of Claim 12 wherein said first and second pair of projections are disposed along axes which are oriented orthogonal to one another.

14. The invention of Claim 10 wherein said first and second pair of projections engage respective recesses defined in said cylindrical member and said structural member.

15. The invention of Claim 14 wherein each of said first and second projections are characterized by a first width and a first length and each respective recess is characterized by a second width and a second length wherein said first and second widths are substantially equal and said first length is less than said second length.
